# EUROPÄISCHE PATENTSCHRIFT

(11) **EP 0 924 215 B1**
(45) Veröffentlichungstag und Bekanntmachung des Hinweises auf die Patenterteilung: **05.02.2003**
(21) Anmeldenummer: 98120559.4
(22) Anmeldetag: 30.10.1998
(51) Int. Cl.: C07F 7/18

(54) **Verfahren zur Herstellung von Alkoxysilanen**
Process for preparing alkoxysilanes
Procédé pour la préparation d'alcoxysilanes

(30) Priorität: 15.12.1997 DE 19755597
(43) Veröffentlichungstag der Anmeldung: 23.06.1999
(73) Patentinhaber: Degussa AG, 40474 Düsseldorf (DE)
(72) Erfinder: Bade, Stefan Dr., 45721 Haltern (DE); Robers, Udo, 48703 Stadtlohn (DE)

(56) Entgegenhaltungen:
- DE-B- 2 532 887
- US-A- 3 008 975
- US-A- 4 851 558

## Beschreibung

Die Erfindung betrifft eine besondere Ausgestaltung des Verfahrens zur Herstellung von Alkoxysilanen der allgemeinen Formel

R¹ ₐR² _{b}R³ _{c}Si(OR⁴)_{4-a-b-c} (I)

in der
R¹ Wasserstoff, Alkyl, Alkenyl, Aryl oder Halogenalkyl;
R² Wasserstoff oder Alkyl;
R³ Wasserstoff oder Alkyl; und
R⁴ Alkyl oder Alkoxyalkyl bedeutet;
a, b und c gleich oder verschieden sein und für 0, 1. 2 oder 3 stehen können, mit der Maßgabe, daß a + b + c ≤ 3 ist, durch Umsetzung von Halogensilanen der allgemeinen Formel

R¹ ₐR² _{b}R³ _{c}SiX_{4-a-b-c} (II)

in der R¹, R² und R³ sowie a, b, und c die angegebene Bedeutung haben und X für Fluor, Chlor, Brom, oder Iod steht, mit einem Alkohol der allgemeinen Formel

R⁴OH , (III)

in der R⁴ die angegebene Bedeutung hat.

### Stand der Technik

Alkoxysilane der Formel I sind wichtige technische Zwischenprodukte oder Endprodukte in der Organosilanchemie. Sie finden u.a. Verwendung als Haftvermittler bei Verbundmaterialien, z.B. in der Lackund Glasfaserindustrie, in der Gießereitechnik und bei der Herstellung von Klebern, sowie für die Herstellung von Elastomeren. Als Einzelbeispiele sind silanisierte Glasfasern, durch feinteilige Materialien verstärkte Polymer- oder Siliconsysteme, z.B. dauerelastische Dichtungsmassen, kieselsäuregefüllte Gummiartikel, z.B. Reifen, die Modifizierung von hydroxyfunktionellen Oberflächen, die Silanpolykondensation zu Polyorganosiloxanen und Bautenschutzmittel zu nennen.

Die Herstellung der Alkoxysilane erfolgt durch Umsetzung von Halogensilanen. die ein oder mehrere Halogenatome enthalten können, mit einem Alkohol, z.B. einem Alkanol oder einem Alkoxyalkanol gemäß der folgenden allgemeinen Gleichung: 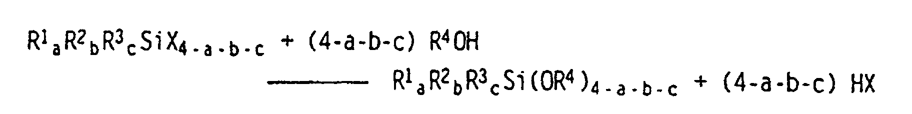 In den Formeln haben R¹, R², R³, R⁴ und X sowie a, b, und c die zuvor angegebene Bedeutung. Als Nebenprodukt entsteht also immer die stöchiometrische Menge an Halogenwasserstoff HX.

Die Umsetzung der Halogensilane mit dem Alkohol wird entweder diskontinuierlich oder kontinuierlich durchgeführt, wobei der entstehende Halogenwasserstoff in die Gasphase überführt wird oder in der flüssigen Phase gebunden bleibt. Übliche Techniken zum Abtrennen des Halogenwasserstoffs durch Überführen in die Gasphase sind Strippen, Destillation (auch Reaktivdestillation). Solche Verfahren sind u.a. in DE 20 61 189 und US 4 298 753 (kontinuierliche Reaktivdestillation); DE 28 00 017, DE-OS 38 01 618. DE-OS 24 09 731 und DE-OS 27 44 726 (Destillation des Rohprodukts zur Entfernung von Chlorwasserstoff); DE-OS 32 36 628 (Reihenschaltung von Rührkessel und Kolonne); DE 862 895 und DD 31 751 (Strippen von Chlorwasserstoff mit Inertgas) beschrieben. Wesentliche Nachteile dieser Verfahren zur Abtrennung von Halogenwasserstoff durch Überführung in die Gasphase sind die Folgereaktionen des Halogenwasserstoffs mit den erzeugten Alkoxysilanen zu Siloxanen nach der Reaktionsgleichung 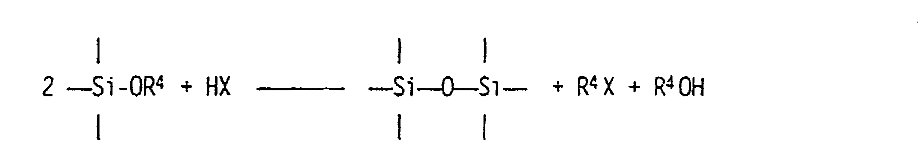 sowie die Limitierung des Umsatzes der Halogensilane zu Alkoxysilanen durch das thermodynamische Gleichgewicht infolge der Anwesenheit des Halogenwasserstoffs in der Reaktionsmischung. Dies gilt besonders dann, wenn mehr als ein Halogenatom gegen einen Alkoxyrest ausgetauscht werden soll. In diesem Fall liegen nicht alkoxylierte, einfach und mehrfach alkoxylierte Silane nebeneinander vor. Bei der Umsetzung von Trihalogensilanen mit Alkohol nehmen die Gleichgewichtskonstanten von der ersten bis zur dritten Stufe hin ab. Das heißt, daß besonders die dritte Alkoxygruppe schwierig einzuführen ist bzw. daß eingeführte dritte Alkoxygruppen leicht mit Halogenwasserstoff unter Rückbildung einer Halogensilanstruktur reagieren.

Ein begehrtes Alkoxysilan ist das 3-Chlorpropyl-methyl-dimethoxysilan (CPMDMO), das aus 3-Chlorpropyl-methyl-dichlorsilan und Methanol entsteht. Auch hier ist das Reaktionsprodukt der ersten Stufe, das Monoalkoxychlorsilan, gegenüber dem Dialkoxysilan begünstigt. Dies zeigt ein Vergleich der Gleichgewichtskonstanten, die für die erste Stufe bei Raumtemperatur deutlich größer als 1 ist, für die zweite Stufe jedoch nur 0,4 beträgt. Nach dem Stand der Technik wird die Umsetzung diskontinuierlich im Rührkesselreaktor durchgeführt, und der entstehende Halogenwasserstoff wird aus dem Reaktionsgemisch durch Destillation abgetrennt. Die Ausbeute beträgt etwa 60 %. Sie kann durch Zugabe von methanolischer Natriummethylattösung auf 65 % gesteigert werden, allerdings mit dem Nachteil. daß Natriumchlorid anfällt, und der Gefahr, daß aus der 3-Chlorpropylgruppe in einer Williamson-Synthese eine 3-Methoxypropylgruppe wird.

Die genannten Nachteile der Verfahren, bei denen der gebildete Halogenwasserstoff in die Gasphase überführt wird, treten deshalb besonders gravierend auf, weil der Übergang des Halogenwasserstoffs aus der flüssigen Phase in die Gasphase relativ langsam erfolgt und somit der Stofftransport des Halogenwasserstoffs den Gesamtprozeß maßgeblich bestimmt. Das Gleichgewicht verschiebt sich also nur vergleichsweise langsam zugunsten der erwünschten alkoxylierten Produkte, und der Halogenwasserstoff fördert entsprechend der obigen Gleichung die Entstehung von Siloxanen. Der Halogenwasserstoff geht besonders langsam bei Umsetzungen mit Methanol in die Gasphase über, da er in Methanol gut löslich ist. Infolge des langsamen Übergangs des Halogenwasserstoffs in die Gasphase sind die Ausbeuten an Alkoxysilan vermindert.

Eine weitere, bereits im Zusammenhang mit der Synthese von 3-Chlorpropyl-methyl-dimethoxysilan erwähnte Technik zur Abtrennung des entstandenen Halogenwasserstoffs aus der Reaktionsmischung ist dessen Bindung in der flüssigen Phase durch Umsetzung mit basischen Stoffen. Werden säurebindende Mittel eingesetzt, z.B. Ammoniak oder (tertiäre) Amine (DE 913 769, in dem die Abtrennung von Chlorwasserstoff mit Ammoniak beschrieben wird) oder Alkoholate, so fallen jedoch stöchiometrische Mengen Salz an, die vom Produkt abgetrennt werden müssen.

Der Einsatz von Lösemitteln bei der Abtrennung des Halogenwasserstoffs ist ebenfalls beschrieben. Dabei dienen die Lösemittel dazu. die Viskosität der stets einphasigen Reaktionsmischung zu verringern (DE-OS 20 61 189) oder den Siedepunkt der stets einphasigen Reaktionsmischung herabzusetzen (DE-OS 28 00 017, DE-OS 32 36 628). Die Verwendung von Lösemitteln in einem zweiphasigen Reaktionsgemisch ist dagegen bisher nicht beschrieben worden.

Dagegen ist bekannt, daß es vorteilhaft ist, bei der Umsetzung des Halogensilans mit dem Alkohol eine Reaktionstemperatur <100°C zu wählen, damit unerwünschte Nebenreaktionen zu Siloxanen vermieden werden (DE-OS 24 03 731). Dies erfordert eine Abtrennung von Halogenwasserstoff auf möglichst niedrigem Temperaturniveau, obwohl für diese Abtrennung höhere Temperaturen günstiger wären.

Zur Herstellung von Alkoxysilanen wird der Einsatz verschiedener Reaktoren beschrieben, nämlich von Rührkesseln (z.B. GB 674 137), Rohrreaktoren (DE-OS 20 33 373), von Rührkesseln mit Kolonne (z.B. DE-OS 32 36 328) und von Reaktions-Destillations-Kolonnen (z.B. US 4 298 753).

DE-PS 25 32 887 behandelt die Veresterungsreaktion von Halogensilanen und Alkoholen in Gegenwart von Chlorkohlenwasserstoffen bei einer Temperatur im Bereich von 80 bis 90°C.

Weiterhin beschreibt US 3,008,975 solche Veresterungsreaktionen in Gegenwart unpolarer Lösungsmittel wie Tetrachlorkohlenstoff, Benzol sowie n-Hexan.

Aus den Beispielen 1 bis 6 der US 4,851,558 ist die Reaktion von Methyldichlorsilan und Methanol in Gegenwart verschiedener unpolarer lösungsmittel zu entnehmen.

Eine wesentliche Aufgabe der vorliegenden Erfindung besteht darin, ein Verfahren zur Herstellung von Alkoxysilanen bereitzustellen, das ohne Salzbildung durch Basen auskommt, aber trotzdem den Halogenwasserstoff effektiv und rasch aus der Reaktionsmischung entfernt und dadurch die Nachteile der beschriebenen Verfahren, bei denen der Halogenwasserstoff in die Gasphase überführt wird, vermeidet oder zumindest weitergehend als bisher möglich zurückdrängt.

### Zeichnungen

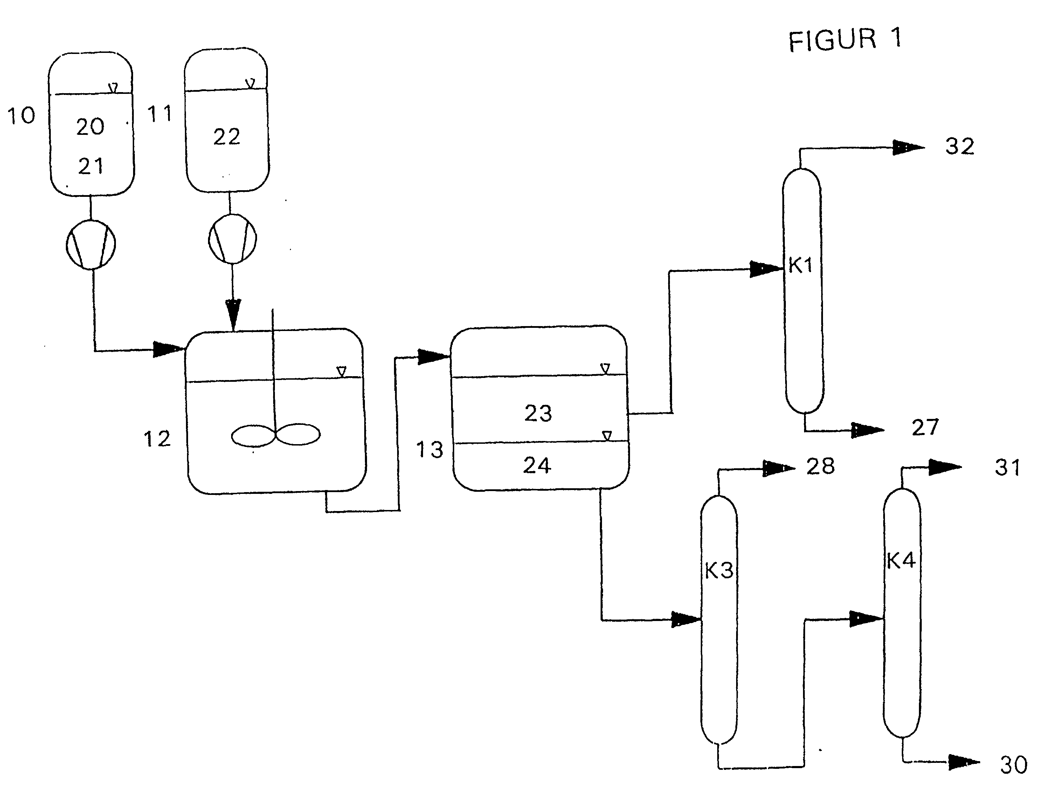

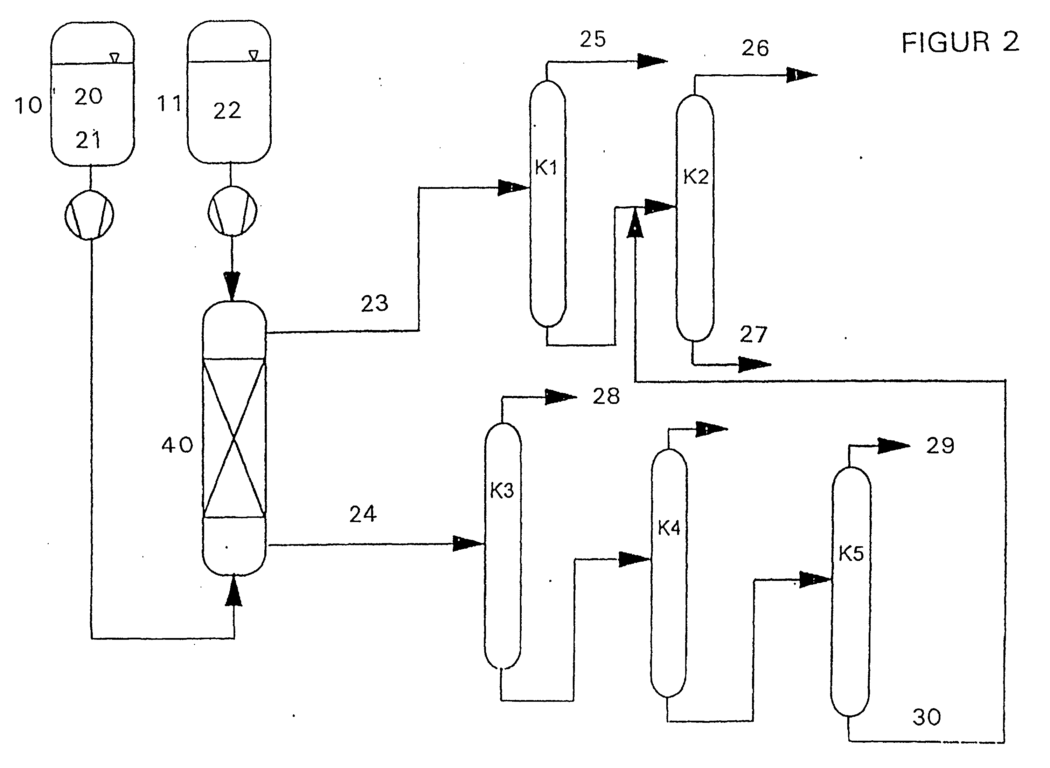

Figur 1 ist ein Blockschema einer Anlage zur diskontinuierlichen Durchführung des erfindungsgemäßen Verfahrens. Figur 2 ist ein Blockschema einer Anlage, in der das erfindungsgemäße Verfahren kontinuierlich durchgeführt werden kann.

### Kurzbeschreibung der Erfindung

Die Aufgabe der Erfindung wird gelöst durch ein Verfahren zur Herstellung von Alkoxysilanen der allgemeinen Formel

R¹ ₐR² _{b}R³ _{c}Si(OR⁴)_{4-a-b-c} (I)

in der
R¹ Wasserstoff. Alkyl, Alkenyl, Aryl oder Halogenalkyl;
R² Wasserstoff oder Alkyl;
R³ Wasserstoff oder Alkyl; und
R⁴ Alkyl oder Alkoxyalkyl bedeutet;
a, b und c gleich oder verschieden sein und für 0, 1, 2 oder 3 stehen können, mit der Maßgabe, daß a + b + c ≤ 3 ist.
durch Umsetzung von Halogensilanen der allgemeinen Formel

R¹ ₐR² _{b}R³ _{c}SiX_{4-a-b-c} (II)

in der R¹, R² und R³ sowie a, b, und c die angegebene Bedeutung haben und X für Fluor, Chlor, Brom oder Iod steht, mit einem Alkohol der allgemeinen Formel

R⁴OH , (III)

in der R⁴ die angegebenen Bedeutung hat, wobei das Verfahren dadurch gekennzeichnet ist, daß das Halogensilan II in einem unpolaren, mit dem Alkohol III nicht mischbaren Lösemittel gelöst wird und die Lösung mit dem Alkohol III in Kontakt gebracht wird.

Die Umsetzung kann als eine Reaktivextraktion bezeichnet werden, weil gleichzeitig mit der chemischen Reaktion des Halogensilans II mit dem Alkohol III eine Extraktion eines Reaktionsproduktes, namlich des entstehenden Halogenwasserstoffs, in eine der Phasen, nämlich die Alkoholphase, erfolgt.

### Vorteile der Erfindung

Das Verfahren nach der Erfindung ist mit einer Reihe von überraschenden Vorteilen verbunden. Die Reaktion findet an der Phasengrenzfläche statt, das entstehende Alkoxysilan verbleibt weit überwiegend in der unpolaren Phase und wird so der Einwirkung des Halogenwasserstoffs entzogen, der in der polaren Alkoholphase gelöst wird. Da die unpolare Phase praktisch frei von Halogenwasserstoff ist. wird einerseits die Folgereaktion des Alkoxysilans zu höhersiedenden oder nicht mehr destillierbaren Siloxanen praktisch vollständig unterbunden und wird andererseits das Gleichgewicht der Alkoxylierungsreaktion in Richtung auf die Alkoxysilane bzw., bei Halogensilanen mit mehr als einem Halogenatom, in Richtung auf die vollständig alkoxylierten Silane verschoben. Weiterhin findet keine Umwandlung von Halogenalkylsubstituenten R¹ in Alkoxyalkylreste statt.

Das Verfahren läuft bei niedrigen Temperaturen ab, was zur Unterdrückung der unerwünschten Folgereaktionen beiträgt. Vor allem höhersiedende Alkohole müssen nicht wie bei der Reaktivdestillation verdampft werden. Das erfindungsgemäße Verfahren ist unabhängig von den Siedelagen der Chlorsilane II, der Alkohole III und der Alkoxysllane I. Dadurch kann die Reaktion generell unter normalem Druck durchgeführt werden.

Ein erwünschtes Ergebnis der erfindungsgemäßen Reaktivextraktion ist eine verbesserte Selektivität der Bildung des (vollständig alkoxylierten) Alkoxysilans damit eine höhere Ausbeute, die bei kontinuierlicher Durchführung des Verfahrens 90 % weit übersteigt. Setzt man Halogensilane mit mehr als einem Halogenatom ein, so werden alle Halogenatome gegen Alkoxygruppen ausgetauscht. Dadurch wird die Aufarbeitung der unpolaren Phase erleichtert (und die Ausbeute verbessert), weil keine unvollständig alkoxylierten Produkte abgetrennt werden müssen. Die Aufarbeitung der polaren Alkoholphase kann in einfacher Weise durch Destillation erfolgen. Gegebenenfalls können die Alkoxysilane, die sich dem Verteilungsgleichgewicht entsprechend in der Alkoholphase befinden, mit frischem unpolarem Lösemittel vor der Destillation extrahiert und in die Reaktion zurückgeführt werden. Der abgetrennte Halogenwasserstoff ist sehr rein. Er kann für viele Zwecke unmittelbar eingesetzt und braucht nicht durch Neutralisation unter Salzbildung entsorgt zu werden.

### Beschreibung der Erfindung

In bevorzugten Alkoxysilanen I und somit auch in bevorzugten Halogensilanen II sowie Alkoholen III bedeuten
R¹ einen Alkyl-, Alkenyl- oder Halogenalkylrest mit 1 bis 6 Kohlenstoffatomen oder einen Arylrest mit 6 bis 10 Kohlenstoffatomen;
R² sowie R³ unabhängig voneinander Wasserstoff oder Alkylreste mit 1 bis 6 Kohlenstoffatomen;
R⁴ einen Alkylrest mit 1 bis 6, insbesondere mit 1 oder 2 Kohlenstoffatomen oder einen Alkoxyalkylrest mit 3 bis 8 Kohlenstoffatomen und 1 oder 2 Sauerstoffatomen; und steht
X für Chlor oder Fluor.

Von den Alkylresten, die in den bevorzugten Alkoxysilanen I und den bevorzugten Ausgangsstoffen II und III vorhanden sein können, seien Methyl, Ethyl, 1-Propyl, 2-Propyl, 1-Butyl, 2-Butyl, 2-Methyl-2-propyl. 1-Pentyl und 1-Hexyl erwähnt. Bevorzugte Alkenylreste sind z.B. Vinyl, 1- und 2-Propenyl, 1-Butenyl und 5-Hexenyl. Beispiele für bevorzugte Halogenalkylreste sind Chlormethyl, 2-Chlorethyl, 3-Chlorpropyl und 3,3,3-Trifluorpropyl. Zu den bevorzugten Arylresten zählen Phenyl, Tolyl, Styryl, 1-Naphthyl und Benzyl. Von den bevorzugten Alkoxyalkylresten seien z.B. 2-Methoxethyl und 2-(2'methoxyethyl)-ethyl genannt.

Als bevorzugte umzusetzende Halogensilane II seien z.B. Trichlorsilan, Methyltrichlorsilan, Dimethyldichlorsilan, Trimethylchlorsilan. Diethyldichlorsilan, 3-Chlorpropyltrichlorsilan, 3-Chlorpropyl-methyl-dichlorsilan. 3,3,3-Trifluorpropyl-methyl-dichlorsilan. Vinyltrichlorsilan, Propyltrichlorsilan, Isobutyltrichlorsilan und n-Octyltrichlorsilan genannt.

Beispiele für bevorzugte geeignete Alkohole III sind Methanol, Ethanol, 1-Propanol, 2-Propanol, 1-Butanol, 1 Hexanol und 2-Methoxyethanol (oder Methylglykol) sowie 2-Ethoxyethanol (oder Ethylglykol).

Man wendet den Alkohol III zweckmäßig in einem erheblichen, vorzugsweise 1- bis 10-fachen stöchiometrischen Überschuß in bezug auf das Halogensilan an, damit er den frei werden Halogenwasserstoff zu lösen vermag.

Das unpolare Lösemittel für die Halogensilane II und, nach der Umsetzung, die Alkoxysilane I darf mit dem (polaren) Alkohol III nicht mischbar sein. Vorteilhaft wird das unpolare Lösemittel so gewählt, daß der Alkohol III bei 20°C zu nicht mehr als 10 %, vorteilhaft zu nicht mehr als 5 % gelöst wird, und umgekehrt der Alkohol III das unpolare Lösemittel nur in entsprechendem Umfang löst. Die Dielektrizitätskonstante des Lösemittels beträgt im allgemeinen > 10. Geeignete Lösemittel sind z.B. flüssige aliphatische oder cycloaliphatische Kohlenwasserstoffe mit 5 bis 16 Kohlenstoffatomen. wie Pentan, Hexan, Octan, Dodecan sowie Isomere dieser Kohlenwasserstoffe und Gemische aus diesen Kohlenwasserstoffen und/oder deren Isomeren: und aromatische Kohlenwasserstoffe mit 6 bis 8 Kohlenstoffatomen, wie Benzol, Toluol, die isomeren Xylole sowie halogenierte aliphatische Kohlenwaserstoffe mit 1 bis 8 Kohlenstoffatomen, wie Dichlormethan, Chloroform und Tetrachlorkohlenstoff.

Das unpolare Lösemittel wird zweckmäßig in einer solchen Menge angewandt, daß der Anteil der darin gelösten Halogensilane und/oder Alkoxysilane 5 bis 30, vorzugsweise 10 bis 20 Gewichtsprozent beträgt.

Die erfindungsgemäße Umsetzung läuft. wie erwähnt, bei niedrigen Temperaturen ab. Zweckmäßig arbeitet man bei -20 bis +60°C, insbesondere bei 10 bis 30°C.

Figur 1 ist das Blockschema einer Anlage zur diskontinuierlichen Durchführung des Verfahrens nach der Erfindung. Aus dem Behälter 10 wird das Halogensilan 20 zusammen mit dem Lösemittel 21 und aus dem Behälter 11 wird der Alkohol 22 in den Mischbehälter 12, z.B. einen Rührkessel, eingefüllt, in dem die beiden flüssigen Phasen miteinander gemischt werden. Dabei steigt die Temperatur, je nach den eingesetzten Stoffmengen auf 20 bis 60 °C an. Die Temperatur kann dadurch geregelt werden, daß man das Halogensilan 20 und den Alkohol 22 nach und nach in den Rührbehälter 12 eindosiert. Alternativ kann der Rührbehälter einen Mantel zur Durchleitung einer Wärmeaustauschflüssigkeit oder einen aufgesetzten Rückflußkühler besitzen, so daß der Siedepunkt des Lösemittels die Reaktionstemperatur bestimmt.

Die Umsetzung ist im allgemeinen nach 10 Minuten bis 100 Minuten beendet, und das Reaktionsgemisch wird in den Trennbehälter **13** überführt, in dem sich die leichtere unpolare Produktphase **23** und die schwerere Alkoholphase **24** trennen. Die letztere wird in die Kolonne **K3** eingeführt und dort in Halogenwasserstoff **28** und eine Sumpffraktion getrennt, die ihrerseits in der Kolonne **K4** in eine Kopffraktion **31**, die Alkohol und Silane enthält und in einen neuen Ansatz eingebracht werden kann, sowie in eine Sumpffraktion **30** zerlegt wird, die Hochsieder (Siloxane) enthält und verworfen werden, z.B. verbrannt werden kann.

Die unpolare Produktphase **23** wird in der Kolonne **K1** destilliert. Man erhält das Kopfprodukt **32**, das das Reaktionsprodukt Alkoxysilan zusammen mit dem Lösemittel und geringen Mengen Alkohol enthält und in einer weiteren Destillation aufgetrennt werden kann. Alternativ ist es auch möglich, das Alkoxysilan in der Kolonne **K1** als Seitenstrom und das Lösemittel sowie den Alkohol als Kopfstrom abzuziehen. Die Sumpffraktion **27** enthält wiederum Hochsieder (Siloxane) und kann behandelt werden wie die Sumpffraktion **30.**

Figur 2 ist das Blockschema einer Anlage zur kontinuierlichen Durchführung des Verfahrens nach der Erfindung. Aus dem Behälter **10** wird das Chlorsilan **20**, gelöst in dem unpolaren Lösemittel **21**, als leichtere Phase kontinuierlich in den unteren Teil der Reaktions-Extraktions-Kolonne **40** eingeleitet. Aus dem Behälter **11** wird der Alkohol **22** als schwerere Phase kontinuierlich auf den Kopf der Reaktions-Extraktions-Kolonne **40** gegeben, in der er sich als kontinuierliche Phase im Gegenstrom zu der aufsteigenden leichteren, in der schwereren Phase dispergierten unpolaren Phase abwärts bewegt. Eine homogene Dispergierung kann man durch geeignete Einbauten oder Füllungen der Reaktions-Extraktions-Kolonne **40** oder besonders vorteilhaft durch Pulsation erzielen. Die unpolare leichtere Phase **23** wird als Kopfprodukt und die schwerere polare Alkoholphase als Sumpfprodukt **24** entnommen.

Sowohl die unpolare Phase **23** als auch die polare Alkoholphase **24** werden in Kolonnen kontinuierlich aufgearbeitet. Aus der unpolare Phase **23** wird zunächst in der Kolonne **K1** das unpolare Lösemittel zusammen mit kleinen Mengen Alkohol abdestilliert und kann als Stoffstrom **25** in den Behälter **10** (?) zurückgeführt werden. Das Sumpfprodukt der Kolonne **K1** wird in die Kolonne **K2** geleitet, aus der als Kopfprodukt das Produkt **26**, d.h. das (vollständig) alkoxylierte Alkoxysilan und als Sumpfprodukt die Hochsieder **27** abgezogen werden.

Die polare Phase **24** wird zunächst in der Kolonne **K3** von Halogenwasserstoff **28** befreit, und in der Kolonne **K4** wird als Kopfprodukt Alkohol **22** abgetrennt, der in den Behälter **11** zurückgeführt werden kann. Das Sumpfprodukt der Kolonne **K4** wird in die Kolonne **K5** geleitet, in der als Kopfprodukt teilalkoxyliertes Chlorsilan **29** abgezogen wird und in den Behälter **10** zurückgeführt werden kann. während Hochsieder **30** in die Kolonne **K2** geleitet werden, in der sie nach Abtrennung destillierbarer Anteile als ein Teil der Hochsieder **27** aus dem Verfahren ausgeschleust werden. Wenn Monohalogensilane als Ausgangsstoffe eingesetzt werden, entstehen keine teilalkoxylierten Silane. Die Kolonne **K5** kann dann entfallen, und das Sumpfprodukt der Kolonne **K4** wird direkt in die Kolonne **K2** eingeführt.

Die folgenden Beispiele sollen das erfindungsgemäße Verfahren weiter erläutern, nicht jedoch seinen Anwendungsbereich beschränken. wie er in den Patentansprüchen definiert ist.

### Beispiel 1 - Diskontinuierliche Herstellung von 3-Chlorpropyl-methyl-dimethoxysilan (CPMDMO)

In einem Rührbehälter werden 600 g einer Lösung von 60 g 3-Chlorpropyl-methyl-dichlorsilan (CPMDCS) in 540 g Cyclohexan vorgelegt. Dann werden 110 g Methanol zugegeben, und die beiden Phasen werden intensiv miteinander vermischt. Die Reaktion erfolgt bei Raumtemperatur für 30 Minuten. Anschließend werden die beiden Phasen durch Absetzen getrennt. Die schwerere Methanolphase enthält den Großteil des gebildeten Chlorwasserstoffs sowie kleinere Anteile CPMDMO und das nur einfach alkoxylierte 3-Chlorpropyl-methyl-chlor-methoxysilan (CPMCMO). Die leichtere Cyclohexanphase enthält den Großteil des gebildeten Produktes CPMDMO, während das monoalkoxylierte CPMCMO in der Cyclohexanphase nicht vorhanden ist. Die folgende Tabelle 1 gibt die durch Gaschromatographie ermittelte Zusammensetzung der beiden Phasen an.

**Tabelle 1**

| | Cyclohexanphase | Methanolphase |
|---|---|---|
| Einsatzstoffe | 540 g Cyclohexan | 110 g Methanol |
| | 60 g CPMDCS | |
| Ergebnis | 48,9 g CPMDMO | 2.57 g CPMDMO |
| | 0 g CPMCMO | 0,62 g CPMCMO |
| | 4,47 g Hochsieder | 22,82 g HCl |
| | 540 g Cyclohexan | 89.94 g Methanol |
| Ausbeute CPMDMO | 90 % | |
| Ausbeute CPMCMO | 1.05 % | |
| Ausbeute Hochsieder | 8.95 % | |

### Beispiel 2 - Kontinuierliche Herstellung von 3-Chlorpropyl-methyl-dimethoxysilan (CPMDMO)

35opf einer kontinuierlich betriebenen Reaktions-Extraktions-Kolonne wird Methanol und am Fuß CPMDCS in Cyclohexan eingespeist. Die unpolare Phase ist die kontinuierliche Phase, der Alkohol wird am Kopf der Kolonne mit einem Ringverteiler in der unpolaren Phase dispergiert. Am Kopf der Reaktions-Extraktions-Kolonne wird die mit CPMDMO beladene Cyclohexanphase abgenommen, am Fuß der Reaktions-Extraktions-Kolonne die mit Chlorwasserstoff beladene Alkoholphase. Beide Phasen werden mittels Gaschromatographie analysiert. Die folgende Tabelle 2 zeigt die Massenströme in g/h, unterschieden nach Eingangs- und Ausgangsströmen sowie nach polarer und unpolarer Phase.

**Tabelle 2**

| | Eingang | | Ausgang | |
|---|---|---|---|---|
| | polar | unpolar | polar | unpolar |
| Cyclohexan | 0 | 900 | 22,0 | 878 |
| Methanol | 279 | 0 | 241,0 | 4,8 |
| CPMDCS | 0 | 100 | 0 | 0 |
| CPMCMO | 0 | 0 | 1,7 | 0 |
| CPMDMO | 0 | 0 | 3,8 | 87,0 |
| Siloxan | 0 | 0 | 1,9 | 0 |
| HCl | 0 | 0 | 37,3 | 0 |
| Summe | 279 | 1.000 | 307,7 | 970,6 |

Die Ausbeute an CPMDMO in beiden Phasen beträgt 96 %. bezogen auf eingesetztes (und zugleich umgesetztes) CPMDCS. CPMCMO (Ausbeute 1.7 %) befindet sich nur in der Alkoholphase. Siloxan (Ausbeute 2.3 %) nur in der Cyclohexanphase.

## Patentansprüche

1. Verfahren zur Herstellung von Alkoxysilanen der allgemeinen Formel
R¹ ₐR² _{b}R³ _{c}Si(OR⁴)_{4-a-b-c} (I)
in der
R¹ Wasserstoff, Alkyl, Alkenyl, Aryl oder Halogenalkyl;
R² Wasserstoff oder Alkyl;
R³ Wasserstoff oder Alkyl; und
R⁴ Alkyl oder Alkoxyalkyl bedeutet;
a, b und c gleich oder verschieden sein und für 0, 1, 2 oder 3 stehen können, mit der Maßgabe, daß a + b + c ≤ 3 ist.
durch Umsetzung eines Halogensilans der allgemeinen Formel
R¹ ₐR² _{b}R³ _{c}SiX_{4-a-b-c}, (II)
in der R¹, R² und R³ sowie a, b, und c die angegebene Bedeutung haben und X für Fluor. Chlor, Brom oder Iod steht, mit einem Alkohol der allgemeinen Formel
R⁴OH, (III)
in der R⁴ die angegebenen Bedeutung hat, **dadurch gekennzeichnet, daß** das Halogensilan II in einem unpolaren, mit dem Alkohol III nicht mischbaren Lösemittel gelöst wird und die Lösung mit dem Alkohol in Kontakt gebracht wird, wobei die Umsetzung als Reaktivextraktion durch geführt wird.

2. Verfahren nach Anspruch 1, **dadurch gekennzeichnet, daß** in den Alkoxysilanen I sowie in den Halogensilanen II und den Alkoholen III
R¹ einen Alkyl-, Alkenyl- oder Halogenalkylrest mit 1 bis 6 Kohlenstoffatomen oder einen Arylrest mit 6 bis 10 Kohlenstoffatomen:
R² sowie R³ unabhängig voneinander Wasserstoff oder einen Alkylrest mit 1 bis 6 Kohlenstoffatomen;
R⁴ einen Alkylrest mit 1 bis 6, insbesondere mit 1 oder 2 Kohlenstoffatomen oder einen Alkoxyalkylrest mit 3 bis 8 Kohlenstoffatomen und 1 oder 2 Sauerstoffatomen bedeuten; und
X für Chlor oder Fluor steht.

3. Verfahren nach Anspruch 1, **dadurch gekennzeichnet, daß** das Halogensilan II 3-Chlorpropyl-methyl-dichlorsilan und der Alkohol III Methanol oder Ethanol ist.

4. Verfahren nach einem der Ansprüche 1 bis 3, **dadurch gekennzeichnet. daß** der Alkohol III in einem 1- bis 10-fachen stöchiometrischen Überschuß in bezug auf das Halogensilan eingesetzt wird.

5. Verfahren nach einem der Ansprüche 1 bis 4, **dadurch gekennzeichnet. daß** das unpolare Lösemittel ein flüssiger aliphatischer oder cycloaliphatischer Kohlenwasserstoff mit 5 bis 16 Kohlenstoffatomen, ein aromatischer Kohlenwasserstoff mit 6 bis 8 Kohlenstoffatomen oder ein halogenierter aliphatischer Kohlenwasserstoff mit 1 bis 8 Kohlenstoffatomen ist.

6. Verfahren nach einem der Ansprüche 1 bis 5, **dadurch gekennzeichnet, daß** das unpolare Lösemittel in einer solchen Menge angewandt wird, daß der Anteil der darin gelösten Halogensilane und/oder Alkoxysilane 5 bis 30 Gewichtsprozent beträgt.

7. Verfahren nach einem der Ansprüche 1 bis 5, **dadurch gekennzeichnet, daß** die Umsetzung bei -20 bis +60°C durchgeführt wird.

8. Verfahren nach einem der Ansprüche 1 bis 7, **dadurch gekennzeichnet, daß** die Umsetzung diskontinuierlich in einer Kombination aus Mischbehälter und Absetzbehälter durchgeführt wird

9. Verfahren nach einem der Ansprüche 1 bis 7, **dadurch gekennzeichnet. daß** die Umsetzung kontinuierlich in einer Reaktions-Extraktions-Kolonne durchgeführt wird, in der die Alkoholphase und die Lösemittelphase im Gegenstrom geführt werden.

## Claims

1. A process for preparing an alkoxysilane of the general formula
R¹ ₐR² _{b}R³ _{c}Si(OR⁴)_{4-a-b-c} (I)
where
R¹ is hydrogen, alkyl, alkenyl, aryl or haloalkyl;
R² is hydrogen or alkyl;
R³ is hydrogen or alkyl; and
R⁴ is alkyl or alkoxyalkyl;
a, b and c are identical or different and can be 0, 1, 2 or 3, with the proviso that a + b + c ≤ 3,
by reacting a halosilane of the general formula
R¹ ₐR² _{b}R³ _{c}SiX_{4-a-b-c} (II)
where R¹, R² and R³ and a, b, and c have the specified meanings and X is fluorine, chlorine, bromine or iodine, with an alcohol of the general formula
R⁴OH (III)
where R⁴ has the meaning specified, **characterized in that** the halosilane II is dissolved in a nonpolar solvent which is immiscible with the alcohol III and the solution is brought into contact with the alcohol, the reaction being carried out as a reactive extraction.

2. A process according to claim 1, **characterized in that**, in the alkoxysilane I and in the halosilane II and the alcohol III,
R¹ is an alkyl, alkenyl or haloalkyl radical having 1 to 6 carbon atoms or an aryl radical having 6 to 10 carbon atoms;
R² and R³ independently of one another are hydrogen or an alkyl radical having 1 to 6 carbon atoms;
R⁴ is an alkyl radical having 1 to 6, in particular 1 or 2, carbon atoms or an alkoxyalkyl radical having 3 to 8 carbon atoms and 1 or 2 oxygen atoms; and
X is chlorine or fluorine.

3. A process according to claim 1, **characterized in that** the halosilane II is (3-chloropropyl)methyldichlorosilane and the alcohol III is methanol or ethanol.

4. A process according to any one of claims 1 to 3, **characterized in that** the alcohol III is used in a 1- to 10-fold stoichiometric excess in relation to the halosilane.

5. A process according to any one of claims 1 to 4, **characterized in that** the nonpolar solvent is a liquid aliphatic or cycloaliphatic hydrocarbon having 5 to 16 carbon atoms, an aromatic hydrocarbon having 6 to 8 carbon atoms or a halogenated aliphatic hydrocarbon having 1 to 8 carbon atoms.

6. A process according to any one of claims 1 to 5, **characterized in that** the nonpolar solvent is used in such an amount that the content of the halosilane and/or alkoxysilane dissolved therein is 5 to 30 per cent by weight.

7. A process according to any one of claims 1 to 5, **characterized in that** the reaction is carried out at from -20 to 460°C.

8. A process according to any one of claims 1 to 7, **characterized in that** the reaction is carried out batchwise in a combination of mixing tank and settling tank.

9. A process according to any one of claims 1 to 7, **characterized in that** the reaction is carried out continuously in a reaction-extraction column in which the alcohol phase and the solvent phase are conducted in countercurrent.

## Revendications

1. Procédé de préparation d'alkoxysilanes de formule générale I
R¹ ₐR² _{b}R³ _{c}Si(OR⁴)_{4-a-b-c} (I)
dans laquelle
R¹ signifie hydrogène, un alkyle, un alkényle, un aryle ou un halogénoalkyle,
R² signifie hydrogène ou un alkyle,
R³ signifie hydrogène ou un allyle, et
R⁴ signifie alkyle ou alkoxyalkyle
a, b, et c peuvent être identiques ou différente et peuvent représenter O, 1, 2 ou 3 avec la précision que a + b + c est ≤ 3
par réaction d'un halogénosilane de formule générale II
R¹ ₐR² _{b}R³ _{c}SiX_{4-a-b-c} (II)
dans laquelle R¹, R², R³ ainsi que a, b, et c ont les signifïcations indiquées et X représente du fluor, du chlore, du brome ou de l'iode, avec un alcool de formule générale III
R⁴OH (III)
dans laquelle R⁴ a la signification indiquée,
**caractérisé en ce que**
l'halogénosilane (II) est dissous dans un solvant non polaire, non miscible avec l'alcool (III) et la solution est mise en contact avec l'alcool, la réaction étant exécutés comme une extraction réactive.

2. Procédé selon la revendication 1,
**caractérisé en ce que**
dans les alkoxysilanes (I) ainsi que dans les halogénosilanes (II) et les alcools (III)
R¹ signifie un reste alkyle, alkényle ou halogène alkyle ayant de 1 à 6 atomes de carbone ou un reste aryle ayant de 6 à 10 atomes de carbone,
R² ainsi que R³, indépendamment l'un de l'autre, signifient de l'hydrogène ou un reste alkyle ayant de 1 à 6 atomes de carbone,
R⁴ signifie un reste alkyle ayant de 1 à 6, en particulier ayant 1 ou 2 atomes de carbone ou un reste alkoxyalkyle ayant de 3 à 8 atomes de carbone et 1 ou 2 atomes d'oxygène, et
X représente du chlore ou du fluor.

3. Procédé selon la revendication 1,
**caractérisé en ce que**
l'halogénosilane (II) est le 3-chloropropylméthyldichlorosilane et l'alcool (III) est du méthanol ou de l'éthanol.

4. Procédé selon l'une quelconque des revendications 1 à 3,
**caractérisé en ce que**
l'alcool III est mis en oeuvre avec un excès de 1 à 10 fois la stoechiométrie par rapport à l'halogénosilane.

5. Procédé selon l'une quelconque des revendications 1 à 4,
**caractérisé en ce que**
le solvant non polaire est un hydrocarbure liquide aliphatique ou cycloaliphatique ayant de 5 à 16 atomes de carbone, un hydrocarbone aromatique ayant de 6 à 8 atomes de carbone ou un hydrocarbure aliphatique halogéné ayant de 1 à 8 atomes de carbone.

6. Procédé selon l'une quelconque des revendications 1 à 5,
**caractérisé en ce que**
le solvant non polaire est utilisé en une quantité telle que la proportion des halogénosilanes et/ou des alkoxysilanes qui y sont dissous, s'élève à 5 à 30 % en poids.

7. Procédé selon l'une quelconque des revendications 1 à 5,
**caractérisé en ce que**
la réaction est effectuée à une température de -20 à +60°C.

8. Procédé selon l'une quelconque des revendications 1 à 7,
**caractérisé en ce que**
la réaction est effectuée d'une manière discontinue dans une combinaison à base de récipient de mélange et récipient de sédimentation.

9. Procédé selon l'une quelconque des revendications 1 à 7,
**caractérisé en ce que**
la réaction est effectuée en continu dans une colonne de réaction/extraction dans laquelle la phase alcoolique et la phase de solvant sont conduites à contre-courant.
